# EUROPEAN PATENT APPLICATION

(11) **EP 4 447 606 A1**
(43) Date of publication of application: **16.10.2024**
(21) Application number: 22916669.9
(22) Date of filing: 26.12.2022
(51) Int. Cl.: H04W 76/18, H04W 76/15, H04W 24/10, H04L 5/00

(54) **METHOD AND APPARATUS FOR RADIO LINK MONITORING FOR CROSS CARRIER SCHEDULING IN WIRELESS COMMUNICATION SYSTEM**

(30) Priority: 31.12.2021 KR 20210194042
(71) Applicant: Samsung Electronics Co., Ltd., Suwon-si, Gyeonggi-do 16677 (KR)
(72) Inventor: HWANG, June, Suwon-si, Gyeonggi-do 16677 (KR); AGIWAL, Anil, Suwon-si, Gyeonggi-do 16677 (KR); JANG, Jaehyuk, Suwon-si, Gyeonggi-do 16677 (KR)
(74) Representative: HGF
(86) International application number: PCT/KR2022/021321
(87) International publication number: WO 2023/128528

(57) **Abstract**

The present disclosure relates to a 5G or 6G communication system for supporting a higher data transmission rate. The present disclosure discloses a method by which user equipment reports a radio link failure (RLF) of a scheduling secondary cell (sSCell) in a wireless communication system, the method comprising the steps of: receiving cross carrier scheduling (CCS) configuration information and an indication of addition of an sSCell; receiving at least one of radio link monitoring (RLM) configuration information and RLF configuration information regarding the sSCell; performing an RLM operation on the sSCell on the basis of at least one of the RLM configuration information and the RLF configuration information; detecting an RLF state of the sSCell on the basis of the RLM operation; and reporting the RLF state of the sSCell on the basis of the result of the detection.

## Description

### [Technical Field]

The disclosure relates to a radio link monitoring method in a wireless communication system and, particularly, to a radio link monitoring method and apparatus for cross-carrier scheduling (CCS) when dynamic spectrum sharing is performed.

### [Background Art]

To meet the demand for wireless data traffic having increased since deployment of 4G communication systems, efforts have been made to develop an improved 5G or pre-5G communication system. Therefore, the 5G communication system is also called a "beyond 4G network" communication system or a "post LTE" system. The 5G communication system is considered to be implemented in ultrahigh frequency (mmWave) bands, (e.g., 60GHz bands) so as to accomplish higher data rates. To decrease the propagation loss and increase the transmission distance of radio waves in the ultrahigh frequency (mmWave) bands, beamforming, massive multiple-input multiple-output (MIMO), full dimensional MIMO (FD-MIMO), array antenna, an analog beam forming, and large scale antenna techniques have been discussed in the 5G communication system. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

Based on the above description and the development of a mobile communication system, various services are capable of being provided. Accordingly, there is a need for a scheme of effectively providing services and, particularly, a need for a scheme of providing an effective radio link monitoring method for cross-carrier scheduling.

### [Disclosure of Invention]

### [Technical Problem]

A disclosed embodiment is to provide a method and apparatus for effectively providing a service in a wireless communication system.

### [Solution to Problem]

According to an embodiment of the disclosure, a method of reporting an RLF of a scheduling secondary cell (sSCell) by a UE in a wireless communication system may include an operation of receiving cross carrier scheduling (CCS) configuration information and an indication associated with addition of an sSCell, an operation of receiving at least one of radio link monitoring (RLM) configuration information or radio link failure (RLF) configuration information in association with the sSCell, an operation of performing an RLM operation with respect to the sSCell based on the at least one of the RLM configuration information and the RLF configuration information, an operation of detecting an RLF state of the sSCell based on the RLM operation, and an operation of reporting the RLF state of the sSCell based on a result of the detection.

The RLM configuration information and the RLF configuration information may include at least one parameter, the RLM configuration information and the RLF configuration information may be configured for each bandwidth part (BWP), the RLM configuration information and the RLF configuration information may include an indicator for distinguishing whether the at least one parameter is for an sSCell or an sPCell.

The at least one parameter includes at least one among a timer value for determining an RLF state, a threshold value for determining in-sync and out-of-sync of RLM, and the maximum number of times of retransmission in an RLC layer.

The operation of performing the RLM operation with respect to the sSCell may perform the RLM operation with respect to all sSCells that schedule an sPCell.

The operation of performing the RLM operation with respect to the sSCell may perform the RLM operation with respect to the sSCell when unicast downlink control information (DCI) is not scheduled by an sPCell, when non-fallback DCI is not scheduled by the sPCell, or when a UE specific search space for a predetermined DCI format is not scheduled by the sPCell.

The operation of performing the RLM operation with respect to the sSCell may perform the RLM operation with respect to an sSCell determined via selection made by a base station or a network entity among a plurality of sSCells.

The operation of detecting of the RLF state of the sSCell may reset a value of an RLF-related timer when the sSCell is deactivated while performing the RLM operation, and the RLF configuration information and the RLM configuration information may be applied when a dual active protocol stack (DAPS) bearer is not configured.

The operation of reporting the RLF state of the sSCell may report the RLF of the sSCell via an sPCell.

The operation of reporting the RLF state of the sSCell may report information related to an RLF indicator of the sSCell and a cause of the RLF state.

The method may further include an operation of receiving an RRCReconfiguration message including a configuration for releasing the sSCell and adding a new sSCell via an sPCell.

According to an embodiment of the disclosure, a UE that reports an RLF of a scheduling secondary cell (sSCell) in a wireless communication system may include a transceiver and at least one processor coupled to the transceiver, and the at least one processor may be configured to receive cross carrier scheduling (CCS) configuration information and an indication associated with addition of an sSCell, to receive at least one of radio link monitoring (RLM) configuration information or radio link failure (RLF) configuration information in association with the sSCell, to perform an RLM operation with respect to the sSCell based on at least one of the RLM configuration information and the RLF configuration information, detect an RLF state of the sSCell based on the RLM operation, and report the RLF state of the sSCell based on a result of the detection.

The RLM configuration information and the RLF configuration information may include at least one parameter, the RLM configuration information and the RLF configuration information may be configured for each bandwidth part (BWP), the RLM configuration information and the RLF configuration information may include an indicator for distinguishing whether the at least one parameter is for an sSCell or an sPCell.

The at least one parameter includes at least one among a timer value for determining an RLF state, a threshold value for determining in-sync and out-of-sync of RLM, and the maximum number of times of retransmission in an RLC layer.

The at least one processor may perform the RLM operation with respect to all sSCells that schedule an sPCell.

The at least one processor may perform the RLM operation with respect to the sSCell when unicast downlink control information (DCI) is not scheduled by an sPCell, when non-fallback DCI is not scheduled by the sPCell, or when a UE specific search space for a predetermined DCI format is not scheduled by the sPCell.

The at least one processor may perform the RLM operation with respect to the sSCell determined via selection made by a base station or a network entity among a plurality of sSCell.

The at least one processor may reset a value of an RLF-related timer when the sSCell is deactivated while performing the RLM operation, and the RLF configuration information and the RLM configuration information may be applied when a dual active protocol stack (DAPS) bearer is not configured.

The at least one processor may report the RLF of the sSCell via the sPCell.

The at least one processor may report information related to an RLF indicator of the sSCell and a cause of the RLF state.

The at least one processor may receive an RRCReconfiguration message including a configuration for releasing the sSCell and adding a new sSCell via an sPCell.

### [Advantageous Effects of Invention]

Embodiments of the disclosure provide a method and apparatus for effectively providing a service in a wireless communication system.

### [Brief Description of Drawings]

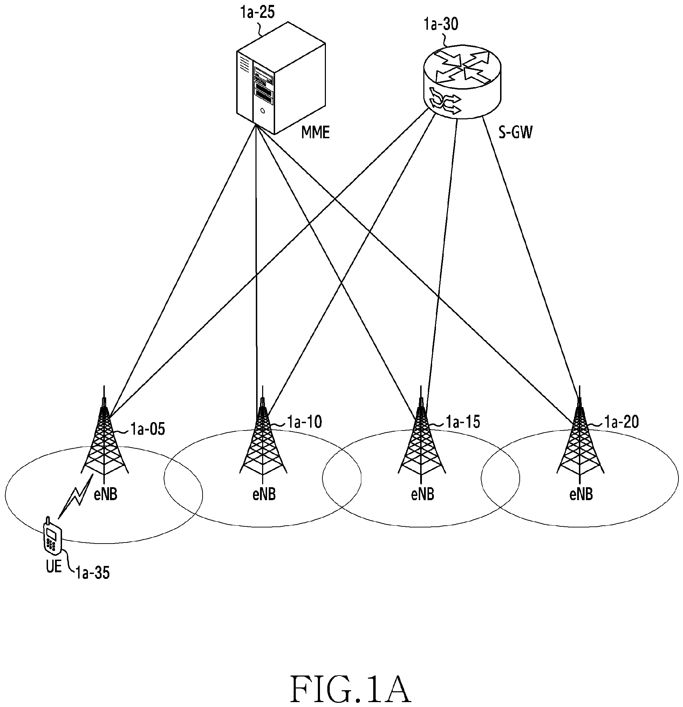

FIG. 1A illustrates a structure of an LTE system according to an embodiment of the disclosure.

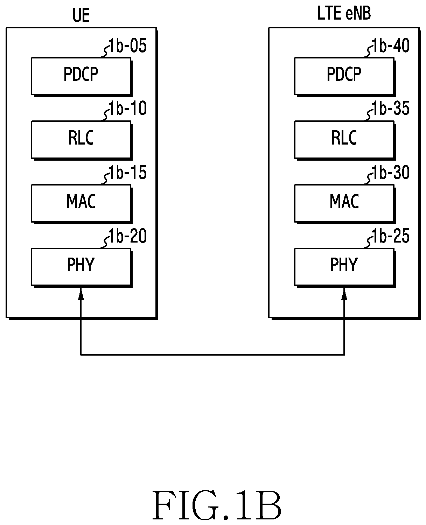

FIG. 1B illustrates a radio protocol structure of an LTE system according to an embodiment of the disclosure.

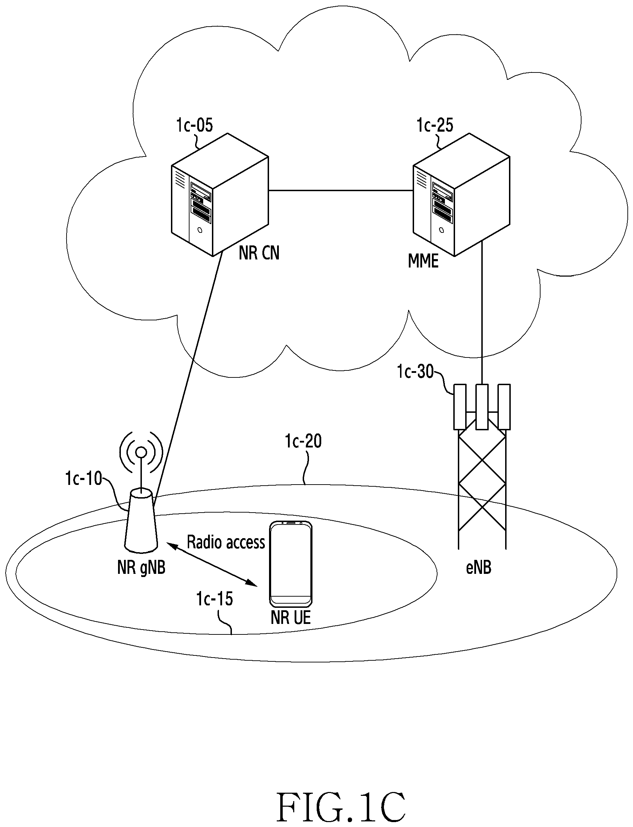

FIG. 1C illustrates a structure of a next-generation mobile communication system according to an embodiment of the disclosure.

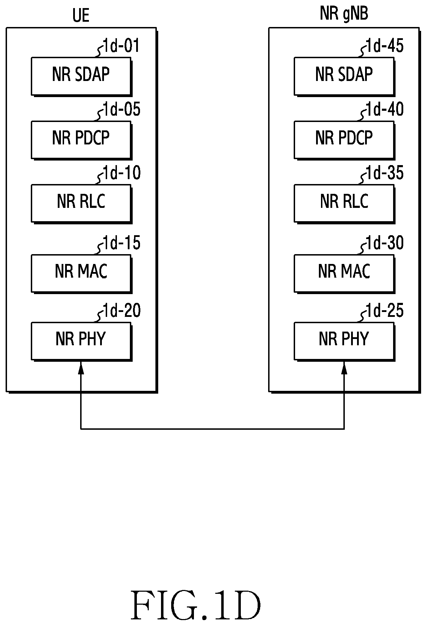

FIG. 1D illustrates a radio protocol structure of a next-generation mobile communication system according to an embodiment of the disclosure.

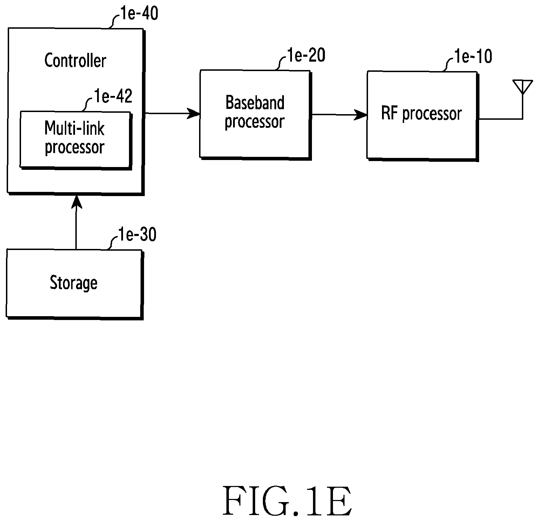

FIG. 1E illustrates block diagram illustrating the structure of a UE according to an embodiment of the disclosure;

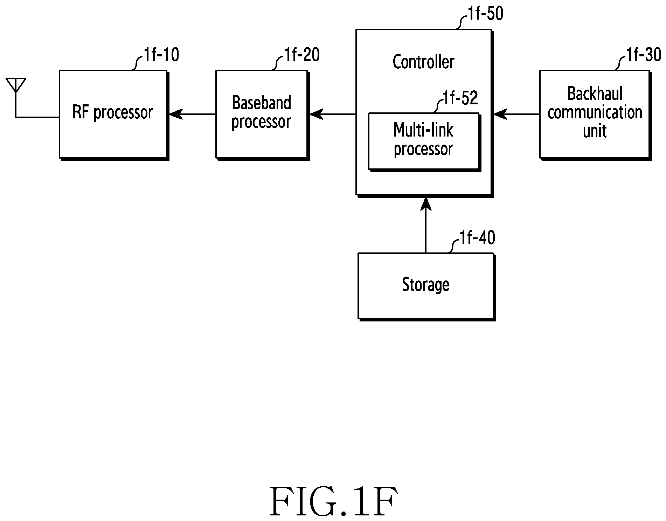

FIG. 1F illustrates block diagram illustrating the structure of an NR base station according to an embodiment of the disclosure;

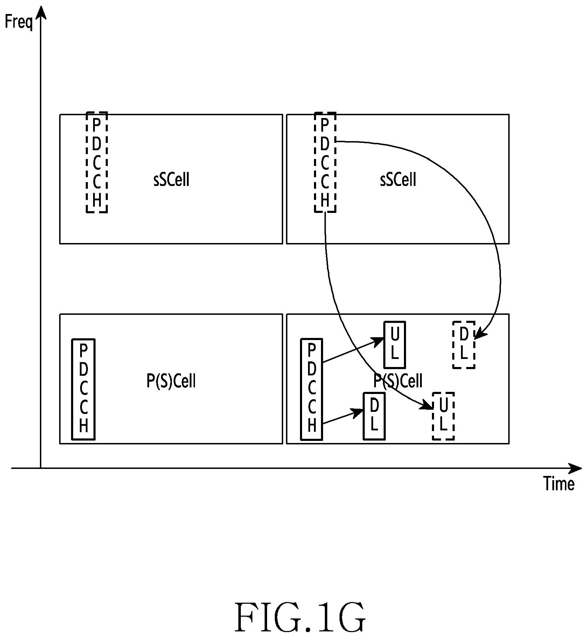

FIG. 1G illustrates an example of cross carrier scheduling according to an embodiment of the disclosure;

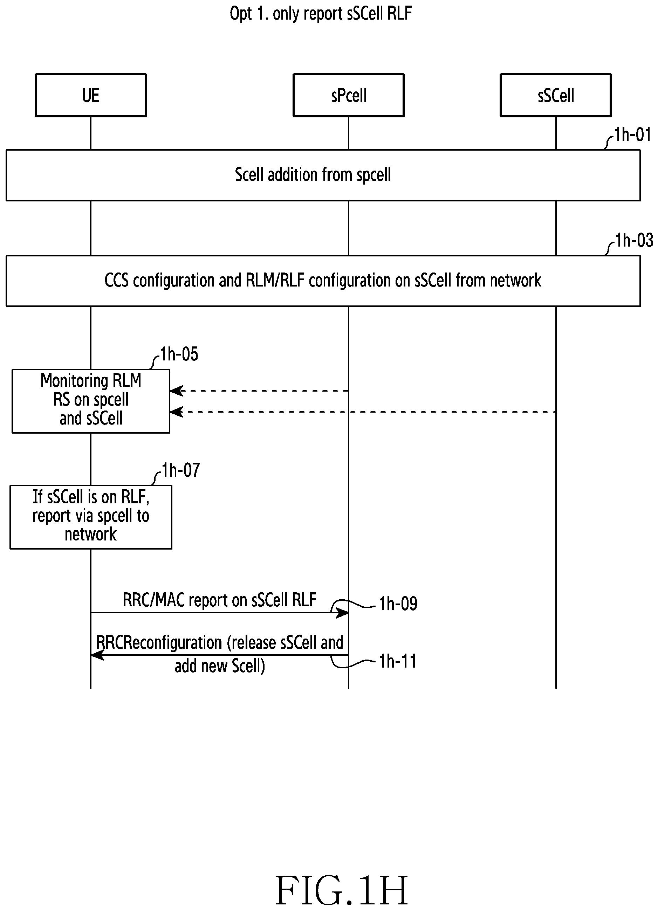

FIG. 1H illustrates a flowchart illustrating the case of reporting an sSCell RLF via an spcell in the case in which an sPcell and an sSCell independently perform RLM according to an embodiment of the disclosure;

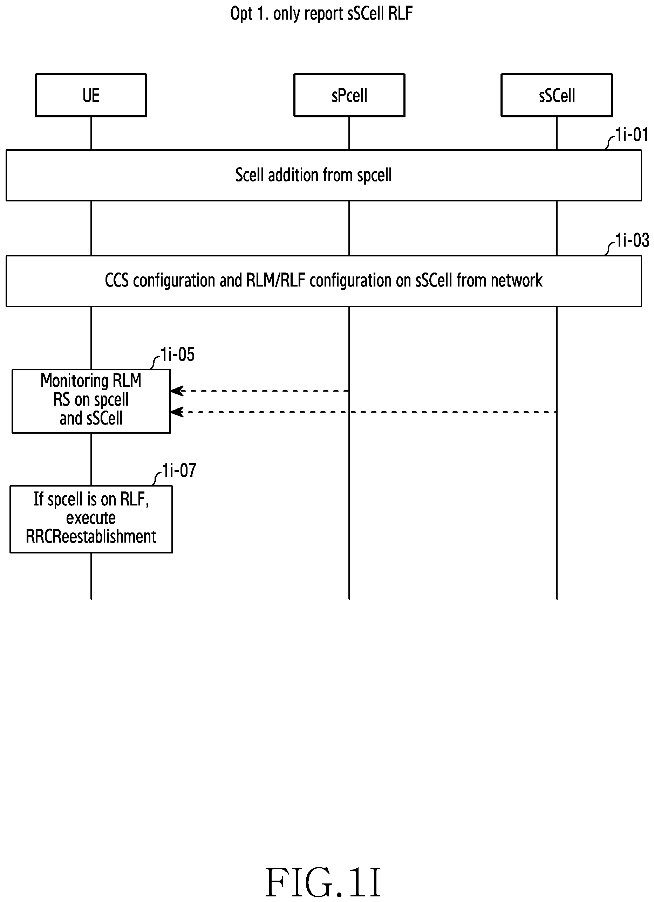

FIG. 1I illustrates a flowchart illustrating the case in which a UE performs RRC reestablishment when an spcell RLF occurs in the case in which an sPcell and an sSCell independently perform RLM according to an embodiment of the disclosure;

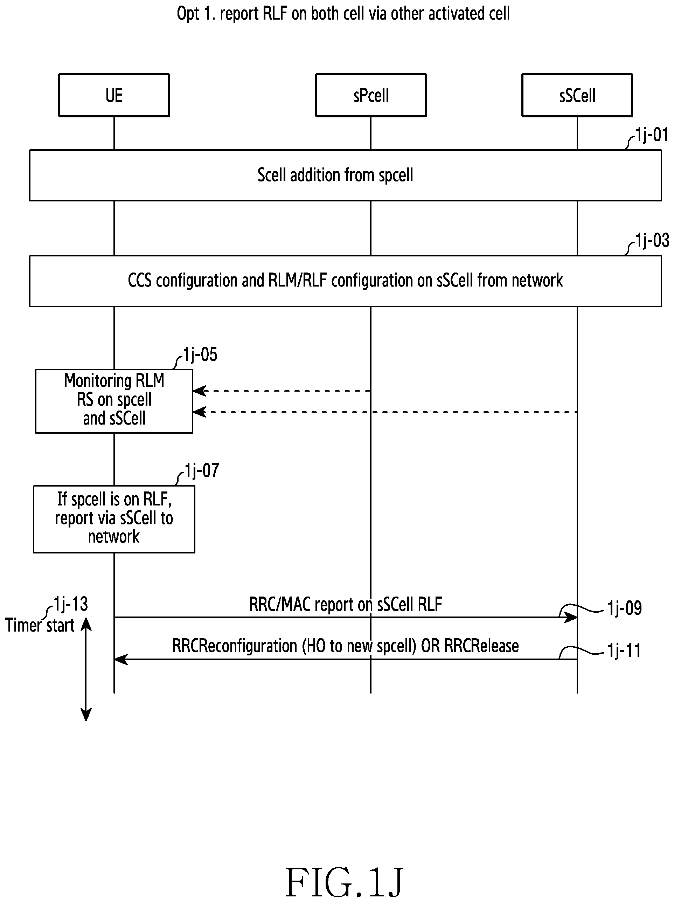

FIG. 1J illustrates a flowchart illustrating the case of reporting an spcell RLF via an sSCell in the case in which an sPcell and an sSCell independently perform RLM according to an embodiment of the disclosure; and

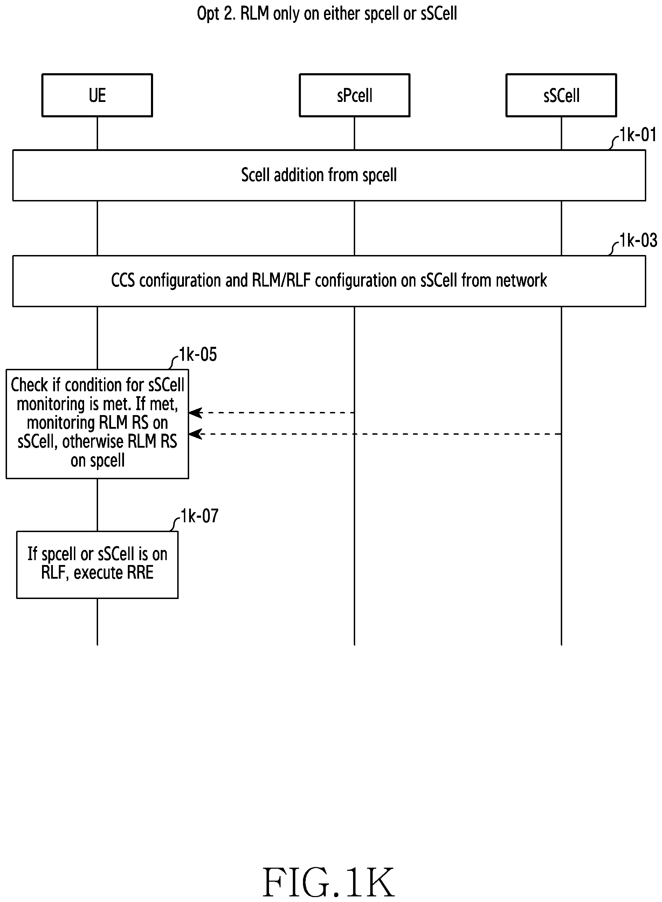

FIG. 1K illustrates a flowchart illustrating the case in which a UE performs RLM with respect to one of an sPcell or an sSCell according to an embodiment of the disclosure.

### [Mode for the Invention]

Hereinafter, the operation principle of the disclosure will be described in detail with reference to the accompanying drawings. In the following description of the disclosure, detailed descriptions of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description of the disclosure, terms and names defined in the 3rd generation partnership project long term evolution (3GPP LTE) standards will be used for the sake of descriptive convenience. However, the disclosure is not limited by these terms and names, and may be applied in the same way to systems that conform other standards.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description of the disclosure, detailed descriptions of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used. For example, the term "terminal" as used in the following description may refer to an MAC entity in a terminal that exists in each of a master cell group (MCG) and a secondary cell group (SCG).

In the following description of the disclosure, terms and names defined in the 3rd generation partnership project long term evolution (3GPP LTE) standards will be used for the sake of descriptive convenience. However, the disclosure is not limited by these terms and names, and may be applied in the same way to systems that conform other standards.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited thereto.

The disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. Also, the term "terminal" may refer to mobile phones, NB-IoT devices, sensors, and other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access(E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE or a mobile station (MS)) transmits data or control signals to a base station (BS or eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a communication system subsequent to LTE, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also requires a packet error rate of 10-5 or less. Therefore, for the services supporting URLLC, a 5G system must provide a transmit time interval (TTI) shorter than those of other services, and may also require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above- described mMTC, URLLC, and eMBB are only examples of different types of services, and service types to which the disclosure is applicable are not limited to the above-described examples.

Furthermore, in the following description of embodiments of the disclosure, LTE, LTE-A, LTE Pro, or 5G (or NR, next-generation mobile communication) systems will be described by way of example, but the embodiments of the disclosure may also be applied to other communication systems having similar technical backgrounds or channel types to the embodiments of the disclosure. In addition, based on determinations by those skilled in the art, the embodiments of the disclosure may also be applied to other communication systems through some modifications without significantly departing from the scope of the disclosure.

The disclosure provides a method of guaranteeing a radio link situation of a scheduling cell in the case in which cross-carrier scheduling operates in a system to which dynamic spectrum sharing technology is applied. According to an embodiment of the disclosure, when cross-carrier scheduling operates, a radio link state of a scheduling cell is monitored, and when the radio link state is poor, a radio link failure is reported via another cell in another cell group that uses carrier aggregation or dual connection.

A disclosed embodiment measures a radio link state of a scheduling cell and performs reporting when a radio link failure occurs, and thus may actively maintain radio quality of a scheduling cell, which is incapable of being recognized via an existing spcell-based radio link state measurement scheme.

FIG. 1A illustrates a structure of an LTE system according to an embodiment of the disclosure.

Referring to FIG. 1A, as illustrated therein, a radio access network of an LTE system may include next-generation base stations (evolved node Bs, hereinafter ENBs, node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 may access an external network through the ENBs 1a-05 to 1a-20 and the S-GW 1a-30.

In FIG. 1A, the ENBs 1a-05 to 1a-20 may correspond to conventional node Bs of a universal mobile telecommunication system (UMTS). The ENBs may be connected to the UE 1a-35 through a radio channel, and perform more complicated roles than the conventional node Bs. In the LTE system, since all user traffic including real-time services, such as voice over IP (VoIP) via the Internet protocol, may be serviced through a shared channel. Thus, a device that collects state information, such as buffer states, available transmit power states, and channel states of UEs, and performs scheduling accordingly is required, and the ENBs 1a-05 to 1a-20 may serve as the device. In general, one ENB may control multiple cells. For example, in order to implement a transfer rate of 100 Mbps, the LTE system may use orthogonal frequency division multiplexing (OFDM) as a radio access technology in a bandwidth of, for example, 20 MHz. Of course, examples of the radio access technology are not limited thereto. Furthermore, the ENBs 1a-05 to 1-20 may employ an adaptive modulation & coding (AMC) scheme for determining a modulation scheme and a channel coding rate according to a channel state of the UE. The S-GW 1a-30 is a device that provides a data bearer, and may generate or remove a data bearer under the control of the MME 1a-25. The MME 1a-25 is responsible for various control functions as well as a mobility management function for a UE, and may be connected to multiple base stations.

FIG. 1B illustrates a radio protocol structure of an LTE system according to an embodiment of the disclosure.

Referring to FIG. 1B, a radio protocol of an LTE system may include a packet data convergence protocol (PDCP) 1b-05 or 1b-40, a radio link control (RLC) 1b-10 or 1b-35, and a medium access control (MAC) 1b-15 or 1b-30 in each of a UE and an ENB.

According to an embodiment, the PDCP may serve to perform operations, such as IP header compression/reconstruction. The main functions of the PDCP may be summarized as follows. Obviously, the example given below is not limiting.
- Header compression and decompression: robust header compression (ROHC) only
- Transfer of user data
- In-sequence delivery of upper layer PDUs at PDCP re-establishment procedure for RLC acknowledged mode (AM)
- For split bearers in DC (only support for RLC AM): PDCP PDU routing for transmission and PDCP PDU reordering for reception)
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to an embodiment, the radio link control (RLC) 1b-10 or 1b-35 may reconfigure a PDCP protocol data unit (PDU) into an appropriate size to perform an ARQ operation. The main functions of the RLC may be summarized as follows. Obviously, the example given below is not limiting.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

According to an embodiment, the MAC 1b-15 or 1b-30 may be connected to several RLC layer devices configured in a single terminal, and multiplex RLC PDUs to a MAC PDU and demultiplex a MAC PDU to RLC PDUs. The main functions of the MAC are summarized as follows. Obviously, the example given below is not limiting.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, a physical layer 1b-20 or 1b-25 may perform operations of channel-coding and modulating upper layer data, generating the same into OFDM symbols, and transmitting the same through a radio channel, or demodulating the OFDM symbols received through the radio channel, channel-decoding the same, and delivering the same to the upper layer. Of course, examples of the operations are not limited thereto.

FIG. 1C illustrates a structure of a next-generation mobile communication system according to an embodiment of the disclosure.

Referring to FIG. 1C, a radio access network of a wireless communication system (hereinafter next-generation mobile communication system, NR, or 5G) may include a next-generation base station (new radio node B, hereinafter NR gNB or NR base station) 1c-10 and a new radio core network (NR-CN) 1c-05. A new radio user equipment (NR UE or NR terminal) 1c-15 may access an external network via the NR gNB 1c-10 and the NR CN 1c-05.

In FIG. 1C, the NR gNB 1c-10 may correspond to an evolved node B (eNB) of a conventional LTE system. The NR gNB 1c-10 may be connected to the NR UE 1c-15 through a radio channel, and provide outstanding services as compared to a conventional node Bs. In the next-generation mobile communication system, since all user traffic may be serviced through a shared channel. Thus, a device that collects state information, such as buffer states, available transmit power states, and channel states of UEs, and performs scheduling accordingly is required, and the NR gNB 1c-10 may serve as the device. In general, one NR gNB may control multiple cells.

In order to implement ultrahigh-speed data transfer beyond the current LTE, the next-generation mobile communication system may provide a wider bandwidth than the existing maximum bandwidth. in addition, the next-generation mobile communication system may employ an orthogonal frequency division multiplexing (OFDM) as a radio access technology, and additionally use a beamforming technology.

Furthermore, according to an embodiment, the NR gNB may employ an adaptive modulation & coding (hereinafter referred to as AMC) scheme for determining a modulation scheme and a channel coding rate according to a channel state of the UE. The NR CN 1c-05 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN may be connected to an MME 1c-25 via a network interface. The MME may be connected to an eNB 1c-30 that is an existing base station.

FIG. 1D illustrates a radio protocol structure of a next-generation mobile communication system according to an embodiment of the disclosure.

Referring to FIG. 1D, a radio protocol of a next-generation mobile communication system may include an NR service data adaptation protocol (SDAP) 1d-01 or 1d-45, an NR packet data convergence protocol (PDCP) 1d-05 or 1d-40, an NR RLC 1d-10 or 1d-35, and an NR MAC 1d-15 or 1d-30 in each of a UE and an NR base station. Obviously, the example given above is not limiting.

According to an embodiment, the main functions of the NR SDAP 1d-01 or 1d-45 may include some of functions below. Obviously, the example given below is not limiting.
- Transfer of user plane data
- Mapping between a QoS flow and a DRB for both DL and UL
- Marking QoS flow ID in both DL and UL packets
- Reflective QoS flow to DRB mapping for UL SDAP PDUs

Whether to use a header of the SDAP layer device, or whether to use a function of the SDAP layer device may be configured for the UE with respect to the SDAP layer device through an RRC message for each PDCP layer device, each bearer, or each logical channel. In a case where an SDAP header is configured, a non-access stratum (NAS) quality of service (QoS) reflective configuration one-bit indicator (NAS reflective QoS) and an access stratum (AS) QoS reflective configuration one-bit indicator (AS reflective QoS) of the SDAP header may indicate the terminal to update or reconfigure mapping information relating to a QoS flow and a data bearer for uplink and downlink. According to an embodiment, the SDAP header may include QoS flow ID information indicating the QoS. According to an embodiment, the QoS information may be used as data processing priority for providing efficient services, scheduling information, or the like.

According to an embodiment, the main functions of the NR SDAP 1d-01 or 1d-45 may include some of functions below. Obviously, the example given below is not limiting.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment of the disclosure, the reordering of the NR PDCP device may refer to a function of reordering PDCP PDU received from a lower layer in an order based on PDCP sequence numbers (SNs). The reordering of the NR PDCP device may include at least one of a function of transferring data to an upper layer according to a rearranged order, a function of directly transferring data without considering order, a function of rearranging order to record lost PDCP PDUs, a function of reporting the state of lost PDCP PDUs to a transmission side, and a function of requesting retransmission of lost PDCP PDUs.

The main functions of the NR RLC 1d-10 or 1d-35 may include some of functions below. Obviously, the example given below is not limiting.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment of the disclosure, the in-sequence delivery of the NR RLC device may refer to a function of successively delivering RLC SDUs received from the lower layer to the upper layer. The in-sequence delivery of the NR RLC may include a function of, if one original RLC SDU is divided into several RLC SDUs and then the RLC SDUs are received, reassembling the several RLC SDUs and transferring the reassembled RLC SDUs, and a function of rearranging received RLC PDUs with reference to RLC sequence numbers (SNs) or PDCP sequence numbers (SNs), and may include at least one of a function of rearranging order to record lost RLC PDUs, and a function of requesting retransmission of lost RLC PDUs.

The in-sequence delivery of the NR RLC 1d-10 or 1d-35 may include at least one of a function of, if there is a lost RLC SDU, sequentially transferring only RLC SDUs before the lost RLC SDU to an upper layer, a function of, although there is a lost RLC SDU, if a predetermined timer has expired, sequentially transferring, to an upper layer, all the RLC SDUs received before the timer is started, and a function of, although there is a lost RLC SDU, if a predetermined timer has expired, sequentially transferring all the RLC SDUs received up to now, to an upper layer.

The NR RLC 1d-10 or 1d-35 may process the RLC PDUs in the received order and deliver the same to the NR PDCP device regardless of the sequence number order (out-of-sequence delivery), and in the case of receiving segments, may receive segments which are stored in a buffer or which are to be received later, reconfigure the same into one complete RLC PDU, process the same, and deliver the same to the NR PDCP device.

The NR RLC layer 1d-10 or 1d-35 may include no concatenation function, which may be performed in the NR MAC layer or replaced with a multiplexing function of the NR MAC layer.

In the foregoing, the out-of-sequence delivery of the NR RLC device 1d-10 or 1d-35 may include at least one of a function of directly delivering RLC SDUs received from a lower layer to an upper layer regardless of the order, a function of reassembling and delivering multiple RLC SDUs received, into which one original RLC SDU has been segmented, and a function of storing and reordering the RLC SNs or PDCP SNs of received RLC PDUs and recording lost RLC PDUs.

According to an embodiment, the NR MAC 1d-15 or 1d-30 may be connected to several NR RLC layer devices configured in a single UE, and the main functions of the NR MAC may include some of functions: below. Obviously, the example given below is not limiting.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment of the disclosure, an NR PHY layers 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. Obviously, the example given above is not limiting.

FIG. 1E illustrates a block diagram illustrating the structure of a UE according to an embodiment of the disclosure.

Referring to FIG. 1E, the UE may include a radio frequency (RF) processor 1e-10, a baseband processor 1e-20, a storage 1e-30, and a controller 1e-40. As a matter of course, the UE is not limited to the example and may include fewer or more components than the components of FIG. 1E.

The RF processor 1e-10 may perform a function for transmitting or receiving a signal via a wireless channel, such as signal band conversion, amplification, or the like. That is, the RF processor 1e-10 may up-convert a baseband signal provided from the baseband processor 1e-20 into an RF band signal, may transmit the RF band signal via an antenna, and may down-convert an RF band signal received via an antenna into a baseband signal. For example, the RF processor 1e-10 may include a transmission filter, a reception filter, an amplifier, a mixer, an oscillator, a digital-to-analog converter (DAC), an analog-to-digital converter (ADC), and the like. However, this is not limited to the above-described example. Although FIG. 1E illustrates only a single antenna, the UE may have a plurality of antennas. In addition, the RF processor 1e-10 may include a plurality of RF chains. Moreover, the RF processor 1e-10 may perform beamforming. For the beamforming, the RF processor 1e-10 may control the phase and the size of each signal transmitted or received via a plurality of antennas or antenna elements. In addition, the RF processor 1e-10 may perform multi-input multi-output (MIMO), and may receive multiple layers when performing a MIMO operation. The RF processor 1e-10 may appropriately configure a plurality of antennas or antenna elements according to control performed by the controller, and may perform reception beam sweeping or adjust the direction a reception beam and a beam width so that a reception beam cooperates with a transmission beam.

The baseband processor 1e-20 may perform a function of converting between a baseband signal and a bitstream according to the physical layer standard of a system. For example, in the case of data transmission, the baseband processor 1e-20 may produce complex symbols by encoding and modulating a transmission bitstream. In addition, in the case of data reception, the baseband processor 1e-20 may reconstruct a reception bitstream by demodulating and decoding a baseband signal provided from the RF processor 1e-10. For example, according to an orthogonal frequency division multiplexing (OFDM) scheme, in the case of data transmission, the baseband processor 2e-20 may produce complex symbols by encoding and modulating a transmission bitstream, may map the complex symbols to subcarriers, and then may configure OFDM symbols via an inverse fast Fourier transform (IFFT) operation and cyclic prefix (CP) insertion. In addition, in the case of data reception, the baseband processor 1e-20 may divide a baseband signal provided from the RF processor 1e-10 in units of OFDM symbols, may restore the signals mapped to the subcarriers via a fast Fourier transform (FFT) operation, and then may reconstruct a received bitstream via demodulation and decoding.

The baseband processor 1e-20 and the RF processor 1e-10 may transmit and receive signals as described above. The baseband processor 1e-20 and the RF processor 1e-10 may be referred to as a transmitter, a receiver, a transceiver, or a communication unit. Furthermore, at least one of the baseband processor 1e-20 and the RF processor 1e-10 may include a plurality of communication modules in order to support a plurality of different radio access technologies. In addition, at least one of the baseband processor 1e-20 and the RF processor 1e-10 may include different communication modules to process signals of different frequency bands. For example, the different radio access technologies may include a wireless LAN (e.g., IEEE 802.11), a cellular network (e.g., LTE), and the like. Furthermore, the different frequency bands may include a super high frequency (SHF) (e.g., 2.NRHz, NRhz) band and a millimeter (mm) wave (e.g., 60 GHz) band. The UE may perform signal transmission or reception with a base station using the baseband processor 1e-20 and the RF processor 1e-10, and a signal may include control information and data. The UE may perform signal transmission or reception with a base station using the baseband processor 1e-20 and the RF processor 1e-10, and a signal may include control information and data.

The storage 1e-30 may store data, such as a basic program, an application program, configuration information, and the like for operating the UE. Particularly, the storage 1e-30 may store information related to a second access node that performs wireless communication using a second radio access technology. The storage 1e-30 may provide data stored therein in response to a request from the controller 1e-40. The storage 1e-30 may be configured as a storage medium such as a ROM, a RAM, a hard disk, a CD-ROM, a DVD, and the like, or a combination of storage media. In addition, the storage 1e-30 may include a plurality of memories. In addition, the storage 1e-30 may include a plurality of memories. According to an embodiment, the storage 1e-30 may store a program for performing the radio link monitoring method for cross-carrier scheduling of the disclosure.

The controller 1e-40 may control the overall operation of the UE. For example, the controller 1e-40 may perform signal transmission or reception via the baseband processor 1e-20 and the RF processor 1e-10. Furthermore, the controller 1e-40 may record data in the storage 1e-40 and may read the recorded data. To this end, the controller 1e-40 may include at least one processor. For example, the controller 1e-40 may include a communication processor (CP) that performs control for communication, and an application processor (AP) that controls a higher layer such as an application program and the like. In addition, at least one configuration in the UE may be embodied as a single chip. In addition, the at least one configuration in the UE may be embodied as a single chip and, furthermore, according to an embodiment of the disclosure, the controller 1e-40 may include a multi-link processor 1e-42 that performs processing for operation in a multi-link mode.

FIG. 1F illustrates a block diagram illustrating the structure of a NR base station according to an embodiment of the disclosure.

Referring to FIG. 1F, the base station may include an RF processor 1f-10, a baseband processor 1f-20, a backhaul communication unit 1f-30, a storage 1f-40, and a controller 1f-50. As a matter of course, the base station is not limited to the example, and may include fewer or more components than the components of FIG. 1F.

The RF processor 1f-10 may perform a function, such as band conversion and amplification of a signal, in order to perform signal transmission or reception via a wireless channel. That is, the RF processor 1f-10 may up-convert a baseband signal provided from the baseband processor 1f-20 into an RF band signal so as to transmit the RF band signal via an antenna, and may down-convert an RF band signal received via an antenna into a baseband signal. For example, the RF processor 1f-10 may include a transmission filter, a reception filter, an amplifier, a mixer, an oscillator, a DAC, an ADC, and the like. Although FIG. 1F illustrates a single antenna, the RF processor 1f-10 may include a plurality of antennas. In addition, the RF processor 1f-10 may include a plurality of RF chains. Moreover, the RF processor 1f-10 may perform beamforming. For the beamforming, the RF processor 1f-10 may control the phase and the size of each signal transmitted or received via a plurality of antennas or antenna elements. The RF processor may perform a downlink MIMO operation by transmitting one or more layers. The RF processor 1f-10 may appropriately configure a plurality of antennas or antenna elements according to control performed by the controller, and may perform reception beam sweeping or adjust the direction a reception beam and a beam width so that a reception beam cooperates with a transmission beam.

The baseband processor 1f-20 may perform a function of conversion between a baseband signal and a bitstream according to the physical layer standard of a first radio access technology. For example, in the case of data transmission, the baseband processor 1f-20 may produce complex symbols by encoding and modulating a transmission bitstream. In addition, in the case of data reception, the baseband processor 1f-20 may restore a reception bitstream by demodulating and decoding a baseband signal provided from the RF processor 1f-10. For example, according to the OFDM scheme, in the case of data transmission, the baseband processor 1f-20 may produce complex symbols by encoding and modulating a transmission bitstream, may map the complex symbols to subcarriers, and then may configure OFDM symbols via an IFFT operation and CP insertion. Furthermore, in the case of data reception, the baseband processor 1f-20 may divide a baseband signal provided from the RF processor 1f-10 in units of OFDM symbols, may restore the signals mapped to the subcarriers via an FFT operation, and then may reconstruct a reception bitstream via demodulation and decoding. The baseband processor 1f-20 and the RF processor 1f-10 may perform signal transmission and signal reception as described above. Accordingly, the baseband processor 1f-20 and the RF processor 1f-10 may be referred to as a transmitter, a receiver, a transceiver, a communication unit, or a wireless communication unit. The base station may perform signal transmission or reception with a UE using the baseband processor 1f-20 and the RF processor 1f-10, and a signal may include control information and data.

The communication unit 1f-30 provides an interface for performing communication with other nodes in a network. That is, the communication unit 1f-30 may convert, into a physical signal, a bitstream transmitted from a primary base station to another node, for example, a secondary base station, a core network, and the like, and may convert a physical signal received from another node into a bitstream. The communication unit 1f-30 may be a backhaul communication unit.

The storage 1f-40 may store data, such as a basic program for operating the base station, an application program, configuration information, and the like. The storage 1f-40 may store information associated with a bearer allocated to a connected UE, a measurement result reported from a connected UE, and the like. In addition, the storage 1f-40 may store information which is a criterion for determining whether to provide or suspend multiple connections to a UE. The storage 1f-40 may provide data stored therein in response to a request from the controller 1f-50. The storage 1f-40 may be configured as a storage medium such as a ROM, a RAM, a hard disk, a CD-ROM, a DVD, and the like, or a combination of storage media. In addition, the storage 1f-40 may include a plurality of memories. According to an embodiment, the storage 1f-40 may store a program for performing a radio link monitoring method for cross-carrier scheduling of the disclosure.

The controller 1f-50 may control the overall operation of the base station. For example, the controller 1f-50 may perform signal transmission or reception via the baseband processor 1f-20 and the RF processor 1f-10, or via the communication unit 1f-30. Furthermore, the controller 1f-50 may record data in the storage 1f-40 and may read the recorded data. To this end, the controller 1f-50 may include at least one processor. In addition, at least one configuration included in the base station may be embodied as a single chip. In addition, at least one configuration included in the base station may be embodied as a single chip. In addition, each configuration of the base station may operate in order to perform the above-describe embodiments.

In the disclosure, terms are defined as below, and the terms and the abbreviations thereof may be interchangeably used.
- Cross carrier scheduling (CCS),
- Dynamic spectrum sharing (DSS),
- P(S)Cell(Primary (SCG(Secondary Cell Group)) Cell): hereinafter, a P(S)Cell denotes a primacy cell (PCell) or a primary SCG cell (PSCell) scheduled in CSS, and is interchangeably used with a special cell (sPCell).
- sSCell (scheduling secondary cell): denotes a scheduling SCell used in CSS.
- Radio link monitoring (RLM),
- Radio link failure (RLF),
- Bandwidth part (BWP),
- Beam failure detection (BFD),

Based on the current 3GPP NR Release 16, DL/UL data transmission/reception scheduling of a Pcell is only available via PDCCH monitoring in the Pcell. From Release 17, in the case in which cross carrier scheduling (CCS) is configured for a UE, DL/UL data scheduling of a Pcell may be available via monitoring of a PDCCH of a predetermined Scell in the same cell group. In this instance, other than data that may be scheduled via a PDCCH of a scheduling SCell, control plane data (or signals) or the like may still be scheduled via a PDCCH of a Pcell, and user plane data (or signals) may be scheduled via the PDCCH of the scheduling SCell. Accordingly, from the perspective of the Pcell, some data (or signal) may be scheduled via the PDCCH via the PCell according to an existing manner, and the remaining data (or signals) may be scheduled via the PDCCH of the scheduling SCell.

FIG. 1G illustrates cross-carrier scheduling according to an embodiment of the disclosure.

As shown in the diagram, in the case in which CCS is configured, a UE monitors a PDCCH of an sSCell, as illustrated in the diagram, in the state in which a P(S)Cell to be scheduled and a scheduling SCell are configured, and thus may obtain scheduling information for DL/UL data transmission or reception of the P(S)cell. In parallel with the same, by monitoring a PDCCH of the P(S)Cell, the UE may obtain scheduling information for another type of DL/UL data transmission or reception (or transmission/reception of control plane information).

In the existing manner, a processing operation of radio link monitoring and radio link failure, which is a failure situation associated with the radio link monitoring, are defined only for a P(S)Cell. In the above-described case, the PDCCH of the SCell is provided via the sSCell and scheduling information for data transmission/reception of the P(S)Cell is also provided via the PDCCH of the SCell, and thus the PDCCH reception quality of the SCell may be an important index for securing the entire performance of the UE. In the existing manner, a radio link monitoring operation in an SCell is not defined in the least. Therefore, the disclosure provides an embodiment related to an RLM/RLF operation associated with an sSCell.

Hereinafter, for ease of description, RLM and RLF operations associated with an sSCell will be described separately as 1) a method of configuring a required parameter for a UE, 2) an RLM/RLF performing (operation) method of an sSCell and a P(S)Cell to be scheduled, and besides, 3) an operation associated with an sSCell RLM/RLF processing method among the operations of a UE.
1) A method of configuring a parameter related to sSCell RLM and RLF operations

An RLM reference signal (RS)/RLM resource may be configured for an sSCell that schedules an sPcell as well as for the sPcell, for each DL BWP of each cell. According to an embodiment, the following information may be included in RadioLinkMonitoringConfig IE and may be included in a DL BWP configuration for each cell.
- Set of RS/resource
   --RS/resource ID: a reference signal for each RLM or a resource id including the reference signal.
   --purpose of the RS = {RLM, BFD, both}: denotes the purpose of use of an RS corresponding to each RS/resource id, and corresponds to an RLM or BFD, or both.
   --type of RS = f SSB, CSI-RS}: denotes a type of an RS corresponding to each RS/resource id, and is limited to a CSI-RS in the case of an sSCell.
   --beamfailureInstanceMaxCount: the maximum number of beam failure events capable of performing beam failure recovery in the case of an RS for BFD.

In addition, according to an embodiment of the disclosure, each parameter may additionally include indicator information capable of distinguishing whether the corresponding parameter is a parameter for RLM in an sPcell or an RLM parameter of an sSCell.

According to an embodiment of the disclosure, RLF-related parameters may be included in cell configuration information of an sPcell and an sSCell for provision, and may be configured for a UE. Alternatively, indication information may be additionally included, which is included in configuration information of an sPcell, but is used for distinguishing whether the corresponding information is for configuration information for an sPcell or configuration information for an sSCell. The following information may be RLF-related information. However, this is not limited to the following example.
--RLF timer and constant: a t310 value, N310 and N311 values, and a T311 timer value.
--Threshold value that distinguishes in-sync and out-of-sync of RLM

In association with a master cell group (MCG) or secondary cell group (SCG) RLF, information associated with the maximum number of times of retransmission capable of being performed in an RLC layer of a UE may be additionally provided to the UE, in order to separately perform sSCell RLF declaration. In the case of a value corresponding to the maximum number of times of retransmission, an indicator indicating whether the corresponding information is for an sPcell or for an sSCell may also be added.

The above-described configuration information may be transmitted via an RRCReconfiguration message together with a CCS configuration, or may be transmitted via an RRCReconfiguration message before or after CCS configuration. In the case in which a CCS configuration is transmitted and then an RLM/RLF configuration is transmitted, a UE may perform an sSCell RLM/RLF operation based on the point in time at which the RLM/RLF configuration is transmitted. In the case in which an RLM/RLF configuration is transmitted before CCS configuration, a UE may perform an sSCell RLM/RLF operation based on the point in time at which the RLM/RLF configuration is transmitted. However, the disclosure is not limited to the above-described example.

### 2) An RLM/RLF operation method of an sSCell and a P(S)Cell (sPcell) to be scheduled

Two available methods may be provided in relation to RLM operations of an sSCell and an sPcell. A first method is to perform an RLM/RLF operation independent for each cell. A second method is to select a predetermined cell to which an RLM/RLF operation is to be performed, and to perform an RLM/RLF operation associated with the selected cell. A cell to which an RLM/RLF operation is to be performed may be selected by a UE or a network.

### Opt 1. The RLM/RLF operation method independent for each cell

Operation of RLM: In the case in which CCS is configured with respect to a UE, that is, in the case in which configuration is performed so that an sPcell is scheduled, an sSCell schedules an sPcell, and the sPcell is scheduled via a PDCCH of the sScell, the UE may receive an RLM/RLF configuration of each of the sPcell and sSCell and may perform an RLM/RLF operation with respect to the sPcell, and additionally to the sSCell. In this instance, the sSCell may be in an activated state. The UE may perform RLM based on an RLM RS configuration given in an active DL BWP of the current sSCell.

### Operation of RLM may be accompanied with the following operations.

- A UE may measure an RLM RS in the current active DL BWP of an sSCell, may transfer an in-sync or out-of-sync indicator to a higher layer from a physical layer, may count the number of indicators, and may begin a timer t310 when the number of in-sync indications successively received is greater than N310. Alternatively, in the case in which the number of out-of-sync indications successively received is greater than N311, the t310 timer that is running may be terminated. In the case in which the t310 timer that has been running expires, the UE may declare an sSCell RLF.

Other than the case of declaring an sSCell RLF based on RLM, an additional case that is capable of declaring an sSCell RLF may be as below.
- A UE may declare an sSCell RLF when the number of times of retransmission performed exceeds the maximum number of times of RLC retransmission while the UE performs uplink transmission from MCG or SCG radio link control (RLC). In this instance, the maximum number of times of RLC retransmission may be a separate parameter for sSCell RLF declaration That is, that may not be a parameter for retransmission in an sPcell.
- The MCG or SCG media access control (MAC) of the UE may provide an indication related to an sSCell random access problem (sSCell specific random access problem) to a higher layer. To this end, in the case of random preamble transmission of the sSCell, the MAC may need to provide an indication related to an sSCell specific random access problem to a higher layer. In the case in which the higher layer receives the indication related to the sSCell specific random access problem from the MAC, the UE may declare an sSCell RLF. An indication related to an sSCell specific random access problem may be issued from the MAC in the following cases.
   --In the case in which the number of times of preamble transmission performed is greater than a predetermined number (preambleTransMax), preambleTransMax may be configured separately for the UE so as to be used for an sSCell RLF.

Specifically, the following operation may be needed when preamble transmission is performed in the MAC. (The content corresponding to the underlined part is added in addition to the existing MAC spec.)

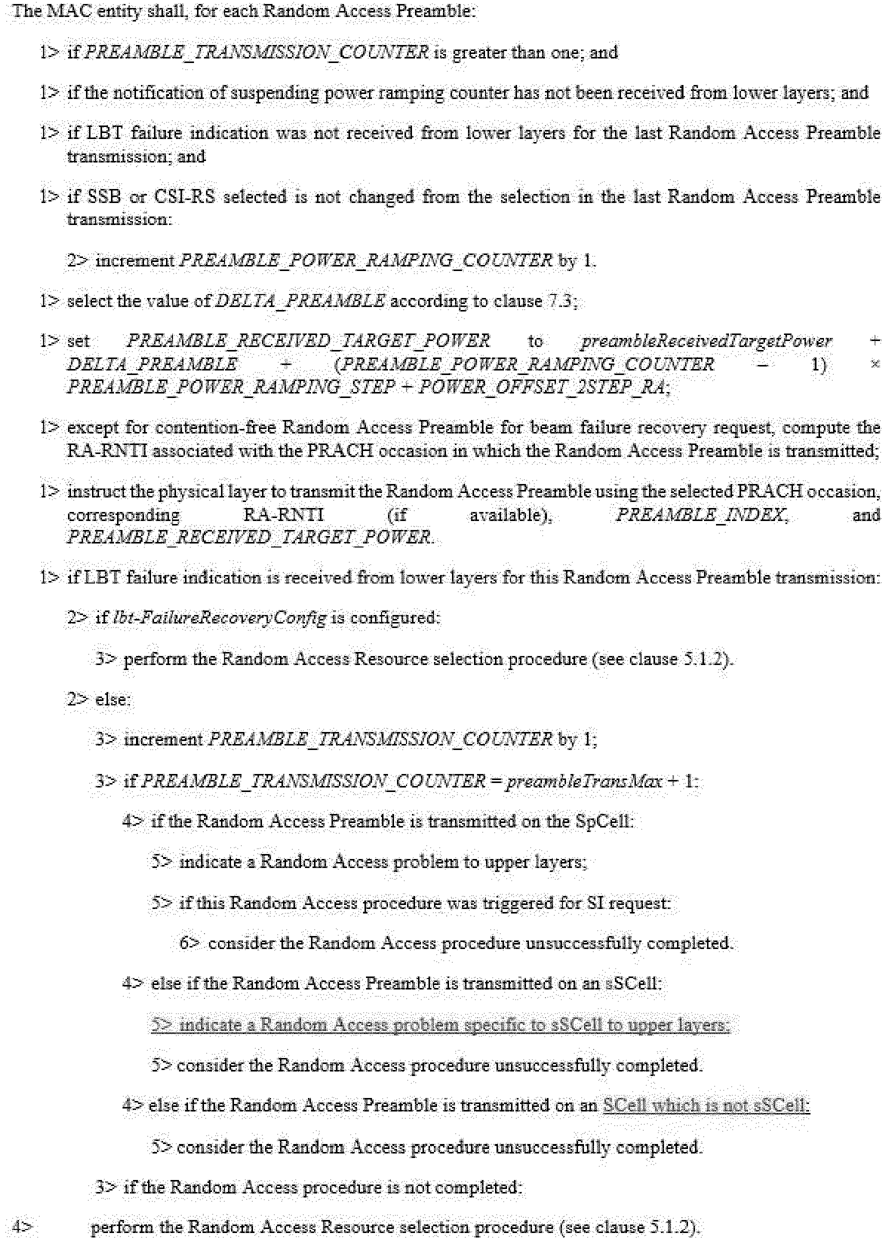

The sSCell RLF may be declared based on the three above-described parameters. When an RLF is declared, a UE may perform one of the following two operations.
1. An sSCell RLF may be reported to a network via another cell, and an sPcell RLF may perform an RRC connection reestablishment operation. Specifically, in the case in which an sSCell RLF is declared, the sSCell RLF may be reported via a predetermined serving cell that is currently activated. Additionally, the activated predetermined serving cell may be required not to be in an RLF state at the point in time of performing reporting, and may be required to be a cell capable of performing UL transmission. In addition, another cell that reports the RLF of the sSCell may need to be a cell in the same cell group as the sSCell in which the RLF occurs. The disclosure is not limited to the above example, and the RLF of the sScell may be reported via a cell of another cell group. As another example, the sSCell RLF may be reported via an sPcell that has been scheduled for the sSCell in the same cell group.
   A. The sSCell RLF may be reported to the network via an RRC message or a MAC CE.
      i. A FailureInformation message, as an example of the RRC message, may include at least one of the following information.
         1. An RLF indicator and a servingCell ID of an sSCell in which an RLF occurs
         2. An sSCell RLF indicator and a serving Cell ID of an sSCell
         3. One of T310 expiry, max RLC retransmission, and a random access problem may be indicated as a failure type.
      ii. A MAC CE may also report an sSCell RLF by including at least one of the above-described information.

1. In the case in which an sSCell RLF or sPcell RLF occurs, and a serving cell that is currently activated (and is not in an RLF state) is present, the sSCell RLF or sPcell RLF may be reported to a network via the serving cell activated (and not being in RLF state). A cell in which an RLF occurs, and a cell that reports the RLF may belong to the same cell group, or may belong to different cell groups.
   A. The sSCell and sPcell RLF may be reported to a network via an RRC message or MAC CE.
      i. A FailureInformation message, as an example of the RRC message, may include at least one of the following information.
         1. An RLF indicator and a servingCell ID of an sSCell/sPcell in which an RLF occurs
         2. An sSCell/sPcell RLF indicator and a serving Cell ID of an sSCell/sPcell
         3. One of T310 expiry, max RLC retransmission, and a random access problem may be indicated as a failure type.
      ii. The MAC CE may also report an sSCell/spcell RLF by including the above-described information.

Opt 2. A UE autonomously makes a selection.
i. In the case in which an RLM/RLF-related parameter is configured for an sPcell and an sSCell, and CCS is configured for the corresponding sPcell and sSCell, and the following condition is satisfied additionally, the UE may monitor an RLM RS of the sSCell and may process an RLF.
   1. Unicast DCI is not scheduled by an sPcell; or
   2. Non-fallback mode DCI is not scheduled by an sPcell; or
   3. A UE specific search space set which is for DCI format 0_1, 1_1, 0_2, and 1_2 is not scheduled by an sPcell.
ii. In the above-mentioned case, the UE may monitor an RLM RS of an sSCell, and count N310/311, and in the case in which the number of counted N310/311 is greater than or equal to a predetermined number, the UE may start/stop a T310 timer. In addition, the UE may declare an RLF in the case in which the number of times of RLC retransmission exceeds a max RLC retransmission value due to UL transmission, or the UE may declare an RLF in the case in which the number of times of random access preamble transmissions in an sSCell is greater than or equal to a predetermined number.
iii. Other than i, that is, in the case in which CCS is not configured, or in the in which unicast DCI is scheduled by an sPcell although CCS is configured (or in the case in which an equivalent condition defined in the above description is not satisfied), the UE may monitor only an RLM RS in the sPcell and may process an RLF situation associated therewith.
iv. When an RLF occurs in an sPcell or sSCell in the above-described cases, that is, when an sSCell RLF or sPcell RLF occurs, the UE may perform an RRC reestablishment procedure.

Opt 3. A network's explicit selection and command
i. A network may indicate, to a UE, performance of RLM with respect to a predetermined cell after CCS configuration, or in parallel with information for configuring CCS. An object to which operating RLM is indicated may be an sPcell or an sSCell, or both. According to a configuration of the network, the UE may perform an RLM and RLF processing operation with respect to the corresponding cell.
ii. In regard of the RLM and RLF processing operation, in the case in which performing RLM with respect to an sPcell or sSCell, or both is indicated to the UE, the UE may monitor an RLM RS with respect to each cell, may count N310/311, and may start or stop a T310 timer in the case in which the number of counted N310/311 is greater than or equal to a predetermined number. In addition, the UE may declare an RLF in the case in which the number of times of RLC retransmission is greater than or equal to (or exceeds) a max RLC retransmission value due to UL transmission, or the UE may declare an RLF in the case in which the number of times of random access preamble transmission in an sSCell/sPcell is greater than or equal to a predetermined number.
iii. In regard of the RLF processing method, in the case in which performing RLM with respect to an sSCell or sPcell is indicated to the UE, and an RLF is declared in association with a predetermined cell, the UE may perform an RRC reestablishment procedure. In the case in which performing RLM with respect to both the sScell and sPcell is indicated to the UE, and the sSCell corresponds to an RLF, the UE may report an RLF via one of the activated serving cells, and may also report an RLF via one of the activated serving cells in the case of an sPcell RLF.

3) An operation associated with an sSCell RLM/RLF processing method during operation of a UE.
A. In the case in which CCS is configured, an RLM/RLF parameter is configured for each cell, and t310 starts while RLM is performed with respect to an sSCell, if the sSCell is deactivated due to a related timer or indication by a network, a UE may stop an RLF-related timer that has been running, and may reset at least one of the RLF-related timer, a constant, and a counter value.
B. In regard of handover, sSCell RLM/RLF-related configuration and operations may be configured and operated only 'when a dual active protocol stack (DAPS) bearer is not configured for the UE or T304 is not operated'. That is, 'when a DAPS bearer is configured and T304 is operated', the UE may terminate an sSCell RLM operation and may reset at least one of a related timer, a constant, and a counter value.
C. In regard of a self-organizing networks (SON)/minimize driving test (MDT) operation, in the case in which an sSCell RLF is declared, the UE may store at least one of the following information in an internal VarRLF variable, and may report the same to a network when receiving a request for variable information from the network.
   i. Information related to an sSCell RLF indicator and/or RLF cause (e.g., at least one of the problems among T310 expiry, max RLC retransmission, sSCell random access may be included, but the disclosure is not limited to the example.)
   ii. Information related to an sPcell RLF indicator and/or RLF cause (e.g., at least one of the problems among T310 expiry, max RLC retransmission, sSCell random access may be included, but the disclosure is not limited to the example.)
   iii. In the case in which an sSCell RLF occurs during CCS, the information associated with an sSCell, for example, is as shown below, and is not limited to the example below.
      1. Cell global ID
      2. PCI(Physical Cell Identity)
      3. Carrier freq as of ARFCN(Absolute Radio Frequency Channel Number)
      4. servingCell ID
   iv. In the case in which an sSCell RLF occurs, the information associated with an sPcell that has been scheduled, for example, is as shown below, and is not limited to the example below.
      1. Cell global ID
      2. PCI
      3. Carrier freq as of ARFCN
      4. servingCell ID

FIG. 1H is a flowchart illustrating the case of reporting an sSCell RLF via an sPcell when an sPcell and an sSCell independently perform RLM according to an embodiment of the disclosure.

An sPcell RLM/RLF related parameter may be configured for a UE by a network, and the UE may perform sPcell RLM/RLF. According to an embodiment of the disclosure, the network may include a base station, an AMF, an SMF, an MME, an S-GW, and a P-GW, and the network is not limited thereto and may include all network entities included in the 4G and 5G communication systems such as a PCF, a UDM, an NSSF HSS, and the like.

Subsequently, from the network, particularly, from an sPcell, the UE may receive an indication associated with addition of an SCell for an sSCell and may add an SCell in operation 1h-01. Next, CCS may be configured and an RLM/RLF parameter associated with an sSCell may be configured for the UE by the network in operation 1h-03. The UE may perform an RLM/RLF operation with respect to each cell, that is, each of an sPcell and an sSCell in operation 1h-05. In the case in which an RLF is declared in an sSCell while RLM is performed, the UE may report an sSCell RLF via a cell that is capable of performing UL transmission and is irrelevant to an RLF among currently activated serving cells in operations 1h-07 and 1h-09. In the embodiment of FIG. 1H, an sPcell is present and thus, the sSCell RLF may be reported via the sPcell. In this instance, the UE may report the RLF via an RRC message or an MAC CE in operation 1h-09. Operation 1h-09 is an embodiment of operation 1h-07 and may not be an operation sequentially performed after operation 1h-07. The network to which the RLF is reported may transmit an RRCReconfiguration message via the sPcell in operation 1h-11. The RRCReconfiguration message may include a configuration that releases an sSCell and adds a new SCell. The UE that receives the RRCReconfiguration message may apply the corresponding RRCReconfiguration message.

FIG. 1I is a flowchart illustrating the case in which a UE performs RRC reestablishment when an sPcell RLF occurs in the case in which an sPcell and an sSCell independently perform RLM according to an embodiment of the disclosure.

An sPcell RLM/RLF related parameter may be configured for a UE by a network, and the UE may perform sPcell RLM/RLF. According to an embodiment of the disclosure, the network may include a base station, an AMF, an SMF, an MME, an S-GW, and a P-GW, and the network is not limited thereto and may include all network entities included in the 4G and 5G communication systems such as a PCF, a UDM, an NSSF HSS, and the like.

Subsequently, from the network, particularly, from an sPcell, the UE may receive an indication associated with addition of an SCell for an sSCell and may add an Scell in operation 1i-01. Next, for the network, CCS may be configured and an RLM/RLF parameter associated with an sSCell may be configured in operation 1i-03. The UE may perform an RLM/RLF operation with respect to each cell, that is, each of an sPcell and an sSCell in operation 1i-05. In the case in which an sPcell RLF is declared while RLM is performed, the UE may immediately perform an RRC reestablishment procedure in operation 1i-07.

FIG. 1J is a flowchart illustrating the case of reporting an sPcell RLF via an sSCell in the case in which an sPcell and an sSCell independently perform RLM according to an embodiment of the disclosure.

The case of an sSCell RLF of FIG. 1J may include operations (operations 1j-01 to operation 1j-05) that correspond to the case of FIG. 1H. In addition, in the case in which an sPcell RLF is declared, the sPcell RLF may be reported via a cell that is capable of performing UL transmission and is irrelevant to an RLF among currently activated serving cells. In the embodiment of FIG. 1J, an sSCell is present and thus, the sPcell RLF may be reported via the sSCell in operations 1j-07 and 1j-09. In this instance, the UE may report the RLF via an RRC message or an MAC CE in operation 1j-09. Operation 1j-09 is an embodiment of operation 1j-07 and may not be an operation sequentially performed after operation 1j-07. The network to which the RLF is reported may transmit a message such as RRCReconfiguration or RRCRelease via the sSCell in operation 1j-11. In the case of the RRCReconfiguration message, a handover command for moving an existing sPcell to another cell may be included. The UE that receives the RRCReconfiguration message may apply the RRCReconfiguration message. The UE may transmit an RRC message or an MAC CE that reports the sPcell RLF, and may operate a timer in operation 1j-13. When a connection control command associated with an sPcell is not received from the network until the timer expires, the UE may autonomously perform RRC reestablishment.

For reference, in the case in which an RLF is reported via another activated cell as shown in FIG. 1H or FIG. 1J, the UE may start a separate timer at the point in time of reporting. In the case in which an RRC message corresponding to the RLF report is not received until the timer expires, the UE may perform an RRCReestablishment operation.

FIG. 1K is a flowchart illustrating the case in which a UE performs RLM with respect to one of an sPcell or an sSCell according to an embodiment of the disclosure.

An sPcell RLM/RLF related parameter may be configured for a UE by a network, and the UE may perform sPcell RLM/RLF. According to an embodiment of the disclosure, the network may include a base station, an AMF, an SMF, an MME, an S-GW, and a P-GW, and the network is not limited thereto and may include all network entities included in the 4G and 5G communication systems such as a PCF, a UDM, an NSSF HSS, and the like.

Subsequently, from the network, particularly, from an sPcell, the UE may receive an indication associated with addition of an SCell for an sSCell and may add an SCell in operation 1k-01. Next, CCS may be configured and an RLM/RLF parameter associated with an sSCell may be configured for the UE by the network in operation 1k-03. With reference to a CCS configuration, the UE may autonomously determine a cell to which RLM/RLF is to be performed in operation 1k-05. In the case in which the following condition is satisfied, the UE may consider an sSCell as an object of RLM/RLF, and may perform RLM/RLF.
1. Unicast DCI is not scheduled by an sPcell; or
2. Non-fallback mode DCI is not scheduled by an sPcell; or
3. A UE specific search space set which is for DCI format 0_1, 1_1, 0_2, and 1_2 is not scheduled by an sPcell.

When the above-described condition is not satisfied, the UE may perform an RLM/RLF operation with respect to an sPcell in operation 1k-05. When an RLF is declared with respect to a cell, that is, an sSCell or an sPcell, which is monitored while the RLM/RLF operation is performed, the UE may perform an RRCReestablishment operation in operation 1k-07.

According to an embodiment of the disclosure, a method of reporting an RLF of a scheduling secondary cell (sSCell) by a UE in a wireless communication system may include an operation of receiving cross carrier scheduling (CCS) configuration information and an indication of addition of an sSCell, an operation of receiving at least one of radio link monitoring (RLM) configuration information or radio link failure (RLF) configuration information in association with the sSCell, an operation of performing an RLM operation with respect to the sSCell based on the at least one of the RLM configuration information and the RLF configuration information, an operation of detecting an RLF state of the sSCell based on the RLM operation, and an operation of reporting the RLF state of the sSCell based on a result of the detection.

The RLM configuration information and the RLF configuration information may include at least one parameter, the RLM configuration information and the RLF configuration information may be configured for each bandwidth part (BWP), and the RLM configuration information and the RLF configuration information may include an indicator for distinguishing whether the at least one parameter is for an sSCell or an sPCell.

The at least one parameter may include at least one among a timer value for determining an RLF state, a threshold value for determining in-sync and out-of-sync of RLM, and the maximum number of times of retransmission in an RLC layer.

The operation of performing the RLM operation with respect to the sSCell may perform the RLM operation with respect to all sSCells that schedule an sPCell.

The operation of performing the RLM operation with respect to the sSCell may perform the RLM operation with respect to the sSCell when unicast downlink control information (DCI) is not scheduled by an sPCell, when non-fallback DCI is not scheduled by the sPCell, or when a UE specific search space for a predetermined DCI format is not scheduled by the sPCell.

The operation of performing the RLM operation with respect to the sSCell may perform the RLM operation with respect to an sSCell determined via selection made by a base station or a network entity among a plurality of sSCells.

The operation of detecting of the RLF state of the sSCell may reset a value of an RLF-related timer when the sSCell is deactivated while performing the RLM operation, and the RLF configuration information and the RLM configuration information may be applied when a dual active protocol stack (DAPS) bearer is not configured.

The operation of reporting the RLF state of the sSCell may report the RLF of the sSCell via an sPCell.

The operation of reporting the RLF state of the sSCell may report information related to an RLF indicator of the sSCell and a cause of the RLF state.

The method may further include an operation of receiving an RRCReconfiguration message including a configuration for releasing the sSCell and adding a new sSCell via an sPCell.

According to an embodiment of the disclosure, a UE that reports an RLF of a scheduling secondary cell (sSCell) in a wireless communication system may include a transceiver and at least one processor coupled to the transceiver, and the at least one processor may be configured to receive cross carrier scheduling (CCS) configuration information and an indication of addition of an sSCell, to receive at least one of radio link monitoring (RLM) configuration information or radio link failure (RLF) configuration information in association with the sSCell, to perform an RLM operation with respect to the sSCell based on at least one of the RLM configuration information and the RLF configuration information, detect an RLF state of the sSCell based on the RLM operation, and report the RLF state of the sSCell based on a result of the detection.

The RLM configuration information and the RLF configuration information may include at least one parameter, the RLM configuration information and the RLF configuration information may be configured for each bandwidth part (BWP), the RLM configuration information and the RLF configuration information may include an indicator for distinguishing whether the at least one parameter is for an sSCell or an sPCell.

The at least one parameter includes at least one among a timer value for determining an RLF state, a threshold value for determining in-sync and out-of-sync of RLM, and the maximum number of times of retransmission in an RLC layer.

The at least one processor may perform the RLM operation with respect to all sSCells that schedule an sPCell.

The at least one processor may perform the RLM operation with respect to the sSCell when unicast downlink control information (DCI) is not scheduled by an sPCell, when non-fallback DCI is not scheduled by the sPCell, or when a UE specific search space for a predetermined DCI format is not scheduled by the sPCell.

The at least one processor may perform the RLM operation with respect to the sSCell determined via selection made by a base station or a network entity among a plurality of sSCell.

The at least one processor may reset a value of an RLF-related timer when the sSCell is deactivated while performing the RLM operation, and the RLF configuration information and the RLM configuration information may be applied when a dual active protocol stack (DAPS) bearer is not configured.

The at least one processor may report the RLF of the sSCell via an sPCell.

The at least one processor may report information related to an RLF indicator of the sSCell and a cause of the RLF state.

The at least one processor may receive an RRCReconfiguration message including a configuration for releasing the sSCell and adding a new sSCell via an sPCell.

Methods disclosed in the claims and/or methods according to the embodiments described in the specification of the disclosure may be implemented by hardware, software, or a combination of hardware and software.

When the methods are implemented by software, a computer-readable storage medium for storing one or more programs(software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of reporting a radio link failure (RLF) of a scheduling secondary cell (sSCell) by a user equipment (UE) in a wireless communication system, the method comprising:
receiving cross carrier scheduling (CCS) configuration information and an indication of addition of an sSCell;
receiving at least one of radio link monitoring (RLM) configuration information or radio link failure (RLF) configuration information in association with the sSCell;
based on the at least one of the RLM configuration information and the RLF configuration information, performing an RLM operation with respect to the sSCell;
based on the RLM operation, detecting an RLF state of the sSCell; and
based on a result of the detection, reporting the RLF state of the sSCell.

2. The method of claim 1,
wherein the RLM configuration information and the RLF configuration information comprise at least one parameter,
wherein the RLM configuration information and the RLF configuration information are configured for each bandwidth part (BWP), and
wherein the RLM configuration information and the RLF configuration information comprise an indicator for distinguishing whether the at least one parameter is for an sSCell or an sPCell.

3. The method of claim 2,
wherein the at least one parameter comprises at least one among a timer value for determining an RLF state, a threshold value for determining in-sync and out-of-sync of RLM, and a maximum number of times of retransmission in an RLC layer.

4. The method of claim 1, wherein the performing of the RLM operation with respect to the sSCell comprises performing the RLM operation with respect to all sSCells that schedule an sPCell.

5. The method of claim 1, wherein the performing of the RLM operation with respect to the sSCell comprises performing the RLM operation with respect to the sSCell in case that unicast downlink control information (DCI) is not scheduled by an sPCell, in case that non-fallback DCI is not scheduled by the sPCell, or in case that a UE specific search space for a predetermined DCI format is not scheduled by the sPCell.

6. The method of claim 1, wherein the performing of the RLM operation with respect to the sSCell comprises performing the RLM operation with respect to an sSCell determined via selection made by a base station or a network entity among a plurality of sSCells.

7. The method of claim 1,
wherein the detecting of the RLF state of the sSCell comprises resetting a value of an RLF-related timer in case that the sSCell is deactivated while performing the RLM operation, and
wherein the RLF configuration information and the RLM configuration information are applied in case that a dual active protocol stack (DAPS) bearer is not configured.

8. The method of claim 1, wherein the reporting of the RLF state of the sSCell comprises reporting the RLF of the sSCell via an sPCell.

9. The method of claim 1, wherein the reporting of the RLF state of the sSCell comprises reporting information related to an RLF indicator of the sSCell and a cause of the RLF state.

10. The method of claim 7, further comprising receiving an RRCReconfiguration message comprising a configuration for releasing the sSCell and adding a new sSCell via an sPCell.

11. A user equipment (UE) that reports a radio link failure (RLF) of a scheduling secondary cell (sSCell) in a wireless communication system, the UE comprising:
a transceiver; and
at least one processor coupled to the transceiver,
wherein the at least one processor is configured to:
receive cross carrier scheduling (CCS) configuration information and an indication of addition of an sSCell;
receive at least one of radio link monitoring (RLM) configuration information or radio link failure (RLF) configuration information in association with the sSCell;
based on at least one of the RLM configuration information and the RLF configuration information, perform an RLM operation with respect to the sSCell;
based on the RLM operation, detect an RLF state of the sSCell; and
based on a result of the detection, report the RLF state of the sSCell.

12. The UE of claim 11,
wherein the RLM configuration information and the RLF configuration information comprise at least one parameter;
wherein the RLM configuration information and the RLF configuration information are configured for each bandwidth part (BWP); and
wherein the RLM configuration information and the RLF configuration information comprise an indicator for distinguishing whether the at least one parameter is for an sSCell or an sPCell.

13. The UE of claim 12, wherein the at least one parameter comprises at least one among a timer value for determining an RLF state, a threshold value for determining in-sync and out-of-sync of RLM, and a maximum number of times of retransmission in an RLC layer.

14. The UE of claim 11, wherein the at least one processor performs the RLM operation with respect to all sSCells that schedule an sPCell.

15. The UE of claim 11, wherein the at least one processor performs the RLM operation with respect to the sSCell when unicast downlink control information (DCI) is not scheduled by an sPCell, when non-fallback DCI is not scheduled by the sPCell, or when a UE specific search space for a predetermined DCI format is not scheduled by the sPCell.
